# FASCICULE DE BREVET EUROPEEN

(11) **EP 1 315 786 B1**
(45) Date de publication et mention de la délivrance du brevet: **29.12.2004**
(21) Numéro de dépôt: 00956736.3
(22) Date de dépôt: 31.08.2000
(51) Int. Cl.: C10L 5/46

(54) **PROCEDE PHYSICO-CHIMIQUE POUR LA PREPARATION ET LA TRANSFORMATION DE DECHETS VEGETAUX ET COMBUSTIBLE OBTENU SELON CE PROCEDE**
PHYSIKOCHEMISCHES VERFAHREN ZUR HERSTELLUNG UND UMSETZUNG VON PFLANZENABFÄLLEN UND DURCH DIESES VERFAHREN ERHALTENER BRENNSTOFF
PHYSICO-CHEMICAL METHOD FOR PREPARING AND TRANSFORMING PLANT WASTE AND RESULTING FUEL

(43) Date de publication de la demande: 04.06.2003
(73) Titulaire: der Stepanian, Manouk, 2800 Delémont (CH); Assoun, Christian, CH-1204 Genève (CH)
(72) Inventeur: der Stepanian, Manouk, 2800 Delémont (CH); Assoun, Christian, CH-1204 Genève (CH)
(74) Mandataire: Gresset, Jean
(86) Numéro de dépôt international: PCT/IB2000/001217
(87) Numéro de publication internationale: WO 2002/018520

(56) Documents cités:
- EP-A- 0 193 666
- WO-A-95/35354
- US-A- 5 910 454

## Description

La présente invention se rapporte à l'élimination des déchets végétaux, et notamment des marcs de café. Depuis de nombreuses années, l'homme du métier sait fabriquer une poudre soluble dans l'eau, notamment par lyophilisation, appelé communément café soluble. Il va de soi qu'après avoir extrait du café les composants qui forment la poudre soluble dans l'eau, il reste des déchets, sous forme de marcs, qui doivent être éliminés. Plusieurs solutions sont envisageables. Il est, par exemple possible de les composter. Cela prend un certain temps et nécessite de grandes surfaces de stockage. Il est aussi possible de les brûler. Dans ce cas, il est nécessaire de les sécher, soit dans un four, ce qui consomme de l'énergie, ou à l'air libre, ce qui prend du temps, car les marcs de café contiennent entre 17 et 20 % d'eau. Il faut, en conséquence, de l'espace pour le stockage.

Il est connu, par le document EP 0 193 666, de fabriquer un combustible à partir de déchets organiques, mélangés à du métal, en les faisant fondre à une température comprise entre 150°C et 380°C, avec adjonction des additifs agissant comme agent solidifiant, comme support de combustion et comme neutralisant. Les toxiques sont éliminés par gazéification, puis le mélange est solidifié, par refroidissement, au moyen d'eau ayant un pH compris entre 8 et 10. La description mentionne différents types d'additifs, notamment l'acide silicique. Un tel procédé n'est applicable qu'avec des déchets fusibles. Il est donc exclu d'éliminer ainsi des déchets végétaux.

Le document WO 95/35354 se rapporte à un procédé d'élimination d'ordures ménagères, ces dernières étant mélangées avec de la chaux vive (CaO). Le mélange ainsi obtenu est densifié sous pression. Il est également prévu d'ajouter d'autres matériaux, organiques ou inorganiques et servant de liant, tels que des dérivés cellulosiques. Selon ce procédé, les déchets font l'objet de plusieurs opérations mécaniques destinées à structurer les déchets de manière à pouvoir éliminer les matières dangereuses et obtenir une structure homogène. L'usage d'acide silicique n'est pas envisagé.

L'élimination des marcs de café par combustion est décrite dans le document US 5 910 454, celles-ci étant mélangées à de la cire (20 à 30%) assurant à la fois une fonction de liant et de combustible d'appoint.

Le but de la présente invention est de permettre une élimination rapide, économique et écologique de ces déchets. Ce but est atteint grâce au fait que, selon l'invention, les déchets végétaux, qui se présentent dans une structure de type granuleuse, fibreuse ou floconneuse, sont mélangés, préalablement à leur combustion, avec un additif à base d'acide silicique, la proportion d'additif étant comprise entre 3 et 5% de la masse finale, préalablement à leur combustion.

De manière avantageuse, l'additif et déchets organiques forment un mélange qui est ensuite compressé pour former des blocs, à l'instar des briquettes.

La présente invention concerne également un combustible formé d'un mélange de déchets organiques pour une part de 95 à 97% et d'un additif à base d'acide silicique.

Cet additif s'est révélé particulièrement efficace lorsqu'il est formé, pour moitié, de l'acide silicique et pour le reste, de méthyle cellulose, de cellulose et de silice.

Plus précisément, L'additif comporte environ 60% pondéral d'acide silicique et de silice, alors que la cellulose et le méthyle cellulose représentent environ 40%, par exemple environ 50% d'acide silicique, 25% de méthyle cellulose, 15% de cellulose et 10% de silice.

Afin de faciliter la manipulation du combustible celui-ci se présente sous forme de briquettes.

L'utilisation de marcs de café comme déchets organique s'avère particulièrement bien adapté.

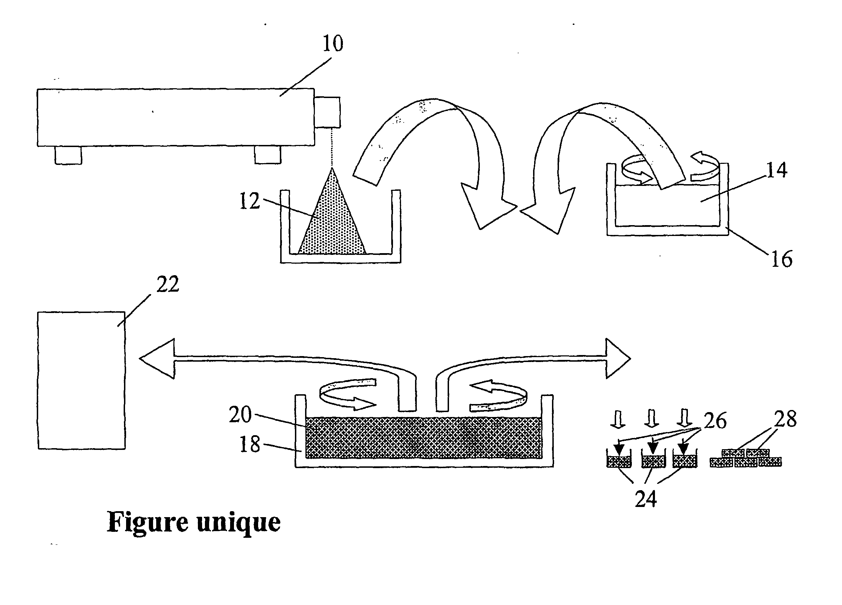

D'autres avantages et caractéristiques de l'invention ressortiront de la description qui va suivre, faite en regard du dessin annexé, dans lequel la figure unique représente, de manière schématique, les différentes étapes du procédé selon l'invention.

Dans la préparation du café, les arômes sont extraits dans une machine schématiquement représentée en 10. Il en sort des marcs 12, contenant généralement de 17 à 20 % d'eau. Ces marcs ne peuvent être directement éliminés par combustion, à cause de cette forte proportion d'eau.

Par ailleurs, un additif 14 est élaboré dans une première cuve 16 par brassage de poudres d'acide silicique (environ 50%), de silice (environ 10%), de méthyle cellulose (environ 25%) et de cellulose pour le solde, jusqu'à obtenir une masse homogène. Cette opération dure typiquement de une à deux heures pour obtenir une centaine de kilos de l'additif 14. Dans ce dernier, la part d'acide silicique est dosée de manière à optimiser l'aptitude du mélange à brûler. Cette part est d'autant plus grande que la concentration d'eau dans les marcs 12 est élevée.

Les marcs de café 12 sont introduits dans une seconde cuve 18, de plus grandes dimensions, et pesés. Il est ensuite ajouté 3 à 5% pondéral de l'additif 14. Le tout est brassé jusqu'à obtenir un mélange 20 ayant une consistance voisine de la sciure. Cela demande une à deux heures également. Le mélange 20 peut alors, sans autre, être brûlé dans une chaudière, schématiquement représentée en 22, du type utilisant la sciure de bois comme carburant.

Si le mélange 20 doit être stocké ou manipulé, il est avantageux de la compacter. A cet effet, il est introduit dans des moules 24 et soumis, au moyen d'une presse représentée par des flèches 26, à une pression comprise entre 50 et 400 kN par cm², typiquement de 200 kN par cm². On obtient ainsi des briquettes 28 qui peuvent sans autre être empilées.

Il est bien évident que l'additif ne permet pas d'éliminer l'eau contenue dans les marcs. Il semble fixer l'eau par adsorption et par absorption, de sorte qu'elle ne freine plus l'inflammation des marcs. De plus, il apparaît que la présence de l'eau augmente la conduction thermique, de sorte que la masse du mélange s'échauffe plus rapidement et brûle ainsi plus facilement.

La cendre obtenue peut, ensuite, être utilisée comme apport silicique, par exemple dans l'agriculture.

Le mode de réalisation décrit ci-dessus permet l'élimination des marcs de café. Il est également applicable à d'autre types de déchets organiques, et plus particulièrement ceux obtenus après une opération de pressage, comme par exemple les déchets d'olives ou de cannes à sucre.

## Revendications

1. Procédé pour la préparation de déchets végétaux, se présentant dans une structure de type granuleuse, fibreuse ou floconneuse (12) en vue de leur élimination par combustion, **caractérisés en ce qu'**ils sont mélangés avec un additif (14) à base d'acide silicique, la part de l'additif étant comprise entre 3 et 5% de la masse finale, préalablement à leur combustion.

2. Procédé selon la revendication 1, **caractérisé en ce que** l'additif (14) et les déchets végétaux, se présentant dans une structure de type granuleuse, fibreuse ou floconneuse(12) constituent un mélange (20) qui est ensuite compressé (26) pour former des blocs, à l'instar des briquettes (28).

3. Combustible **caractérisé en ce qu'**il est formé d'un mélange (20) de déchets végétaux, se présentant dans une structure de type granuleuse, fibreuse ou floconneuse (12) pour une part de 95 à 97% et d'un additif (14) à base d'acide silicique.

4. Combustible selon la revendication 3, **caractérisé en ce que** ledit additif (14) comporte, pour moitié, de l'acide silicique et pour le reste, du méthyle cellulose, de la cellulose et de la silice.

5. Combustible selon la revendication 4, **caractérisé en ce que** ledit additif (14) est formé à environ 60% pondéral d'acide silicique et de silice, alors que la cellulose et le méthyle cellulose représentent 40%.

6. Combustible selon la revendication 5 **caractérisé en ce que** ledit additif (14) comporte environ 50% d'acide silicique, 25% de méthyle cellulose, 15% de cellulose et 10% de silice.

7. Combustible selon l'une des revendications 3 à 6, **caractérisé en ce qu'**il se présente sous forme de briquettes (28).

8. Combustible selon l'une des revendications 3 à 7, **caractérisé en ce que** lesdits déchets sont formés de marcs de café.

## Claims

1. Method for preparing plant waste, in a granular, fibrous or flaky type structure (12) for disposal by combustion, **characterized in that** it is mixed with a silicic acid based additive (14), the additive part being comprised between 3 and 5% of the final weight, prior to combustion.

2. Method according to claim 1, **characterized in that** the additive (14) and the plant waste (12), in a granular, fibrous or flaky type structure form a mixture (20) which is then compressed (26) to form blocks, like briquettes (28).

3. Fuel **characterized in that** it is formed of a mixture (20) of 95 to 97% organic waste (12), in a granular, fibrous or flaky type structure, and a silicic acid based additive (14).

4. Fuel according to claim 3, **characterized in that** said additive (14) comprises half silicic acid and the remainder is methyl cellulose, cellulose and silica.

5. Fuel according to claim 4, **characterized in that** said additive (14) is formed of around 60% by weight of silicic acid and silica, whereas the cellulose and methyl cellulose represent 40%.

6. Fuel according to claim 5, **characterized in that** said additive (14) comprises around 50% silicic acid, 25% methyl cellulose, 15% cellulose and 10% silica.

7. Fuel according to any of claims 3 to 6, **characterized in that** it takes the form of briquettes (28).

8. Fuel according to any of claims 3 to 7, **characterized in that** said waste is formed by coffee grounds.

## Patentansprüche

1. Verfahren zur Bearbeitung von Pflanzenabfällen, die in einer Struktur der körnigen, faserigen oder flockigen Art (12) vorliegen, zum Zweck ihrer Beseitigung durch Verbrennung **dadurch gekennzeichnet, dass** sie vor der Verbrennung mit einem Zusatzstoff (14) auf Kieselsäurebasis vermischt werden, wobei der Anteil des Zusatzstoffs zwischen 3 und 5% ihrer Endmasse beträgt.

2. Verfahren nach Anspruch 1 **dadurch gekennzeichnet, dass** der Zusatzstoff (14) und die Pflanzenabfälle in einer Struktur der körnigen, faserigen oder flockigen Art (12) vorliegen und ein Gemisch (20) darstellen, das sodann zu Blocks nach Art der Briketts (28) komprimiert (26) wird.

3. Brennstoff **dadurch gekennzeichnet, dass** er aus einem Gemisch (20) pflanzlicher Abfälle, die in Form einer Struktur der körnigen, faserigen oder flockigen Art (12) im Anteil von 95 bis 97 % vorliegen, und einem Zusatzstoff (14) auf Kieselsäurebasis gebildet ist.

4. Brennstoff nach Anspruch 3 **dadurch gekennzeichnet, dass** der Zusatzstoff (14) zur Hälfte aus Kieselsäure und zum Rest aus Methylzellulose, Zellulose und Kieselerde besteht.

5. Brennstoff nach Anspruch 4 **dadurch gekennzeichnet, dass** der Zusatzstoff (14) zu etwa 60 Gewichtsprozent aus Kieselsäure und Kieselerde besteht, während Zellulose und Methylzellulose 40 Prozent ausmachen.

6. Brennstoff nach Anspruch 5 **dadurch gekennzeichnet, dass** der Zusatzstoff (14) etwa 50 Prozent Kieselsäure, 25 Prozent Methylzellulose, 15 Prozent Zellulose und 10 Prozent Kieselerde umfasst.

7. Brennstoff nach einem der Ansprüche 3 bis 6 **dadurch gekennzeichnet, dass** er in Form von Briketts (28) vorliegt.

8. Brennstoff nach einem der Ansprüche 3 bis 7 **dadurch gekennzeichnet, dass** die Abfälle aus Kaffeesatz bestehen.
